# EUROPEAN PATENT APPLICATION

(11) **EP 2 658 179 A1**
(43) Date of publication of application: **30.10.2013**
(21) Application number: 11852066.7
(22) Date of filing: 20.12.2011
(51) Int. Cl.: H04L 12/28

(54) **NOMADIC DATA ACCESS SYSTEM AND DEVICE**

(30) Priority: 20.12.2010 CN 201010597553
(71) Applicant: Datang Mobile Communications Equipment Co., Ltd., Beijing 100083 (CN)
(72) Inventor: QIN, Fei, Beijing 100083 (CN); WANG, Yingmin, Beijing 100083 (CN); ZHAO, Jian, Beijing 100083 (CN); ZHAO, Jinbo, Beijing 100083 (CN)
(74) Representative: Laufhütte, Dieter
(86) International application number: PCT/CN2011/084268
(87) International publication number: WO 2012/083834

(57) **Abstract**

This application discloses a nomadic data access system and provides a new communication system and relevant devices to lower the complexity of the system. The system includes a core network and an NDA NodeB, wherein an NDA part in the core network is configured to establish a communication interface with the NDA NodeB, to establish a communication link for an NDA user equipment through the NDA NodeB and to transmit an NDA user data service to a 3GPP part in the core network; and the NDA NodeB is configured to establish the communication interface with the NDA part in the core network, to establish for the NDA user equipment the communication link with the NDA part in the core network and to transmit the NDA user data service, or to establish a communication link with a local area or wide area Internet and to transmit the NDA user data service to the local area or wide area Internet. This application further discloses devices in the system and relevant cell access and switching methods.

## Description

This application claims the benefit of Chinese Patent Application No. 201010597553.1, filed with the Chinese Patent Office on December 20, 2011 and entitled "Nomadic data access system and device and data transmission method", which is hereby incorporated by reference in its entirety.

### Field of the Invention

The present invention relates to the field of communications and particularly to a nomadic data access system and device.

### Background of the Invention

There are dramatically growing demands for mobile data traffic along with popularization of the mobile Internet and smart cellular phones. At present there are generally two solutions to an improved capacity.

One of the solutions is the use of a Wireless Local Area Network (WLAN) or WiFi system. The WiFi system is loosely coupled with a 3G system and performs authentication and billing in a core network of the 3G system. The use of WiFi to cover a hotspot area can play a good role in distribution of a data service. However the WiFi system and the 3G system are two different architectures of standards, so a user is typically required to select manually one of the networks for an access and it is difficult to perform smooth transition of a service between the two access networks. Moreover a link quality can not be guaranteed since there is interference between the unlicensed Industrial Scientific and Medical (ISM) frequency band adopted for WiFi and private WiFi devices, microwave ovens and other various devices. Concurrent networking is difficult for a plurality of operators, and since operating frequency bands of the operators are unlicensed frequency bands, mutual interference will arise if a good coordinated and unified plan is absent for networking of the operators in the same area.

The other solution is the use of a home NodeB (e.g., Femto, HNB or HeNB). The home NodeB can be connected to the core network of the 3G system through a macro NodeB. The home NodeB is at a lower cost and deployed more flexibly and plays a specific role in distribution of indoor data and also can support a telecommunication-level service. However the home NodeB has not been further simplified or optimized for the characteristic of an indoor service, and taking Long Term Evolution (LTE) as an example, substantially the entirety of LTE protocol architecture and interfaces has to be adopted together with the same physical layer design and the same radio frequency requirement as an LTE system, so there is no insignificant reduction in implementation complexity.

### Summary of the Invention

Embodiments of the invention provide a nomadic data access system and device and a data transmission method to provide a new communication system and a device and method relevant thereto so as to lower the complexity of the system.

A Nomadic Data Access (NDA) system including a core network and an NDA NodeB, wherein:
the core network includes an NDA part and a 3GPP part, wherein the NDA part is configured to establish a communication interface with the NDA NodeB, to establish a communication link for an NDA user equipment through the NDA NodeB and to transmit an NDA user data service to the 3GPP part in the core network; and the 3GPP part is configured to process the NDA user data service and to perform 3GPP system functions of Release 10 and earlier; and
the NDA NodeB is configured to establish the communication interface with the NDA part in the core network, to establish for the NDA user equipment the communication link with the NDA part in the core network and to transmit the NDA user data service, or to establish a communication link with a local area or wide area Internet and to transmit the NDA user data service to the local area or wide area Internet.

A core network includes an NDA part and a 3GPP part, wherein:
the NDA part in the core network is configured to establish a communication interface with an NDA NodeB, to establish a communication link for an NDA user equipment through the NDA NodeB and to transmit an NDA user data service to the 3GPP part in the core network; and
the 3GPP part in the core network is configured to process the NDA user data service.

An NDA NodeB includes a radio frequency module, a physical layer processing module, an MAC layer processing module, an RLC layer processing module, an RRC layer processing module, a routing module and an S1-nda interface module, wherein:
the S1-nda interface module is configured to establish a communication interface with an NDA part in a core network, to establish for an NDA user equipment a communication link with the NDA part in the core network and to transmit an NDA user data service; and
the routing module is configured to establish a communication link with a local area or wide area Internet and to transmit the NDA user data service to the local area or wide area Internet.

An NDA gateway includes:
an NDA NodeB interface module configured to establish a communication interface with an NDA NodeB, to establish for an NDA user equipment a communication link with the NDA NodeB and to transmit an NDA user data service with the NDA NodeB;
an NDA NodeB management module configured to perform one or more procedures of authentication, access management and parameter configuration on the NDA NodeB; and
an S1-ndu interface module configured to establish a communication interface with an NDA part in a core network, to establish for the NDA user equipment a communication link with the NDA part in the core network and to transmit the NDA user data service with the NDA part in the core network.

An NDA user equipment includes:
a radio frequency module configured to transmit and receive a data signal;
a physical layer processing module configured to perform one or more procedures of encoding/decoding and modulating/demodulating the data signal, a multi-antenna transmission procedure and link adaptation and retransmission procedures;
an MAC layer processing module configured to perform one or more procedures of scheduling, transmitting and retransmitting an RLC layer data packet in the uplink and to decode and/or retransmit an MAC data packet in the downlink;
an RLC layer processing module configured to segment an IP data packet and retransmit an IP data packet in the uplink and to concatenate and reassemble an MAC data packet and retransmit an MAC data packet in the downlink;
an RRC layer processing module configured to control a radio link and to manage a radio resource; and
an IP application layer processing module configured to process various information and data of service application layer.

A cell access method applicable at the network side includes the steps of:
an NDA NodeB configuring a control channel after establishing a connection with a core network; and
the NDA NodeB transmitting a system broadcast message including identification information indicaing that NodeB capability attributed to NDA mode.

A cell access method applicable at the user equipment side includes the steps of:
an NDA user equipment receiving a system broadcast message; and
the NDA NodeB being configured in NDA mode when the system broadcast message includes identification information indicating NodeB capability attributed to the NDA mode.

A cell switching method includes the steps of:
an NDA user equipment supporting an LTE protocol receiving a system broadcast message of an adjacent cell in LTE mode, wherein the system broadcast message includes identification information indicating NodeB capability attributed to NDA mode;
the NDA user equipment measuring the adjacent cell and reporting a measurement result; and
disconnecting from an LTE NodeB, switching from the LTE mode to the NDA mode, being configured in the NDA mode and accessing the adjacent NDA cell upon reception of a switching instruction from the LTE NodeB.

An NDA NodeB includes:
a configuration module configured to configure a control channel after establishing a connection with a core network; and
a radio frequency module configured to send a system broadcast message including identification information indicating NodeB capability attributed to NDA mode.

An NDA user equipment includes:
a radio frequency module configured to receive a system broadcast message; and
a configuration module configured to configure the NDA user equipment in NDA mode when the system broadcast message includes identification information indicating NodeB capability attributed to the NDA mode.

An NDA user equipment includes:
a radio frequency module configured to receive a system broadcast message of an adjacent cell in LTE mode, wherein the system broadcast message includes identification information indicating NodeB capability attributed to NDA mode;
a measurement module configured to measure the adjacent cell and to report a measurement result;
a control module is configured to be disconnected from an LTE NodeB and to switch from the LTE mode to the NDA module upon reception of a switching instruction from the LTE NodeB;
a configuration module is configured to configure the NDA user equipment in the NDA mode; and
an RRC layer processing module configured to access the adjacent NDA cell.

The embodiments of the invention provide a simplified NDA NodeB and a simplified interface so that the NDA NodeB can be connected directly with the Internet without a core network and the core network can cooperate with the simplified NDA NodeB via the simplified interface to thereby improve a data transmission capacity and efficiency and accommodate a demand for a nomadic high-speed IP data service.

### Brief Description of the Drawings

Fig.1 is a structural diagram of a nomadic data access system according to an embodiment of the invention;

Fig.2 is a structural diagram of a nomadic data access system with a gateway according to an embodiment of the invention;

Fig.3 is a structural diagram of a core network according to an embodiment of the invention;

Fig.4 is a structural diagram of an NDA NodeB according to an embodiment of the invention;

Fig.5 is a general structural diagram of an NDA gateway according to an embodiment of the invention;

Fig.6 is a detailed structural diagram of an NDA gateway according to an embodiment of the invention;

Fig.7 is a structural diagram of an NDA user equipment according to an embodiment of the invention;

Fig.8 is a general flow chart of a cell access method at the network side according to an embodiment of the invention;

Fig.9 is a general flow chart of a cell access method at the user equipment side according to an embodiment of the invention;

Fig.10 is a flow chart of a cell access method of an NDA user equipment only supporting NDA mode according to an embodiment of the invention;

Fig. 11 is a flow chart of a cell access method of an LTE + NDA user equipment supporting NDA mode and LTE mode according to an embodiment of the invention;

Fig. 12 is a general flow chart of a cell switching method according to an embodiment of the invention;

Fig.13 is a detailed flow chart of a cell switching method according to an embodiment of the invention;

Fig. 14 is a structural diagram of an NDA NodeB during a cell access according to an embodiment of the invention;

Fig. 15 is a structural diagram of an NDA user equipment during a cell access according to an embodiment of the invention; and

Fig. 16 is a structural diagram of an NDA user equipment during switching of a cell according to an embodiment of the invention.

### Detailed Description of the Embodiments

In recent years, there are dramatically growing demands for mobile data traffic along with popularization of the mobile Internet and smart cellular phones. A traditional cellular mobile communication system has been designed primarily for a telecommunication-level service with requirements upon high-speed mobility, seamless switching and high Quality of Service (QoS) and may be inefficient and costly to bear an Internet Protocol (IP) data packet service with large traffic and low-speed mobility in a hotspot area. It is desirable for a cellular mobile operator to find a low-cost and high-capacity solution to an indoor wireless data access.

In view of the characteristics of an indoor service, including low-speed mobility, a large bandwidth demand, a larger traffic demand, a small number of users, predominant pure IP data Internet services, a uniform QoS as required, etc., embodiments of the invention propose a Nomadic Data Access (simply NDA in this application) solution. This solution relates to a data transmission system and method designed technically based upon a physical layer of Long Term Evolution (LTE) of the 3rd Generation Partnership Project (3GPP) and can enable efficient data service transmission at a low cost indoor and in a hotspot area. Particular implementations of the invention will be described below with reference to the drawings.

An idea of the invention lies in that wireless access protocol flows are further simplified based upon the LTE protocol architecture to support a nomadic high-speed IP data access, to sacrifice some mobility, Quality of Service (QoS) and security, to lower costs of a wireless access device (NodeB) and a data user equipment device and to improve a data access capability. The simplified wireless access device and a core network of a traditional cellular network are integrated with each other via a simplified interface. Moreover a complete LTE user equipment is enabled to support both a complete LTE mode and a simplified NDA access mode to thereby support operation in an LTE cellular mobile network and an LTE nomadic data access network.

In order to get better knowledge of the technical solution according to the embodiments of the invention as a whole, firstly the architecture of a communication system relating to the invention will be described.

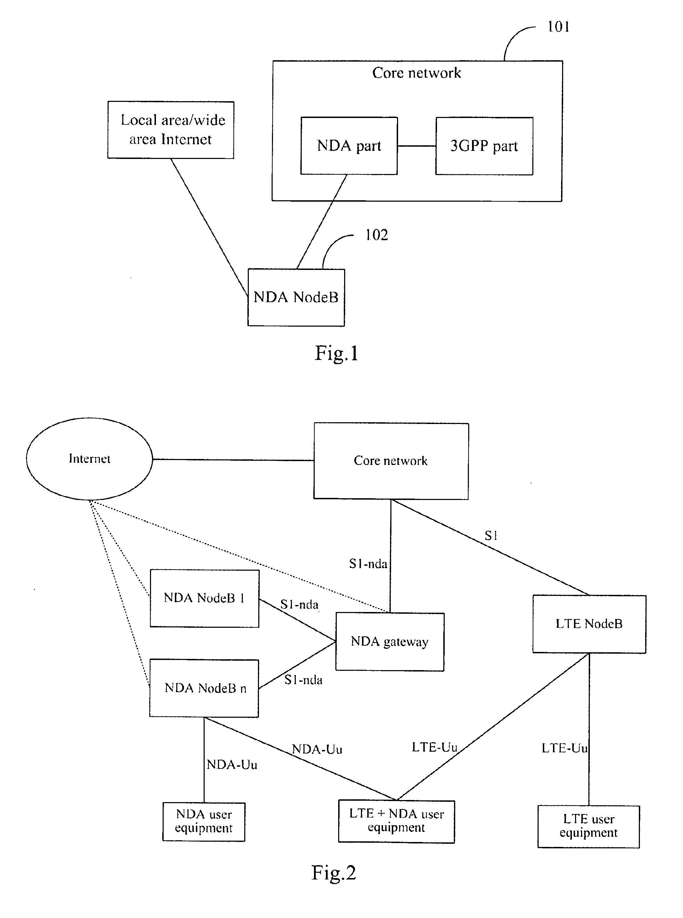

Referring to Fig.1, a nomadic data access system in this embodiment includes a core network 101 and an NDA NodeB 102. The core network 101 includes an NDA part and a 3GPP part.

The NDA part in the core network 101 is configured to establish a communication interface with the NDA NodeB, to establish a communication link for an NDA user equipment through the NDA NodeB and to transmit an NDA user data service to the 3GPP part in the core network. The NDA part in the core network 101 is a functional module further simplified or improved based upon a corresponding module of an original LTE system and can be designed as a separate functional entity or can alternatively be a simplified flow and a simplified processing mode embedded on the corresponding LTE functional entity. The 3GPP part in the core network is configured to perform original functions of an LTE core network other than the simplified or improved part of this embodiment, that is, to perform 3GPP system functions of Release 10 (R10) and earlier, e.g., to process a data service, etc.

The NDA NodeB 102 is configured to establish the communication interface with the NDA part in the core network 101, to establish for the NDA user equipment the communication link with the NDA part in the core network and to transmit the NDA user data service, or to establish a communication link with a local area or wide area Internet and to transmit the NDA user data service to the local area or wide area Internet. In this embodiment, the NDA NodeB 102 has the function to communicate with the core network 101 and also the function to communicate with the local area or wide area Internet and can accommodate a demand of a user for an access to the core network or the local area or wide area Internet and improve effectively transmission capacity.

The system further includes an NDA gateway 103 as illustrated in Fig.2. The NDA gateway 103 is configured to be connected respectively with the NDA NodeB and the NDA part in the core network and to forward the NDA user data service transmitted between the NDA NodeB and the NDA part in the core network. The NDA gateway 103 can play a role in aggregating and then connecting data and interfaces of a plrauity of NDA NodeBs with the core network to thereby alleviate capacity burden on the core network arising from a large number of NDA NodeBs accessing the core network directly. The NDA gateway 103 is further configured to authenticate and manage the NDA NodeB to thereby facilitate maintenance of the system.

The system further includes the NDA user equipment 104 configured to be connected with the NDA NodeB and to transmit the NDA user data service with the NDA NodeB. The NDA user equipment 104 can further support LTE mode to function as an LTE + NDA user equipment.

The system further includes an LTE NodeB and an LTE user equipment. The LTE NodeB is an existing 3GPP LTE NodeB, and reference can be made to the 3rd Generation partnership Project (3GPP) protocol for its specific protocol and function. The LTE user equipment is an existing 3GPP LTE user equipment, and reference can be made to the 3GPP protocol for its specific protocol and function.

The network structure of the system has been known from the foregoing description, and the respective devices in the system will be introduced below in details. Implementations of the respective devices in cooperation with other devices will also be described, but this will not mean that these devices must be implemented in cooperation with the other devices, and indeed, when these devices are implemented separately, problems existing with the respective devices can also be addressed although a better technical effect can be achieved when they are used in cooperation.

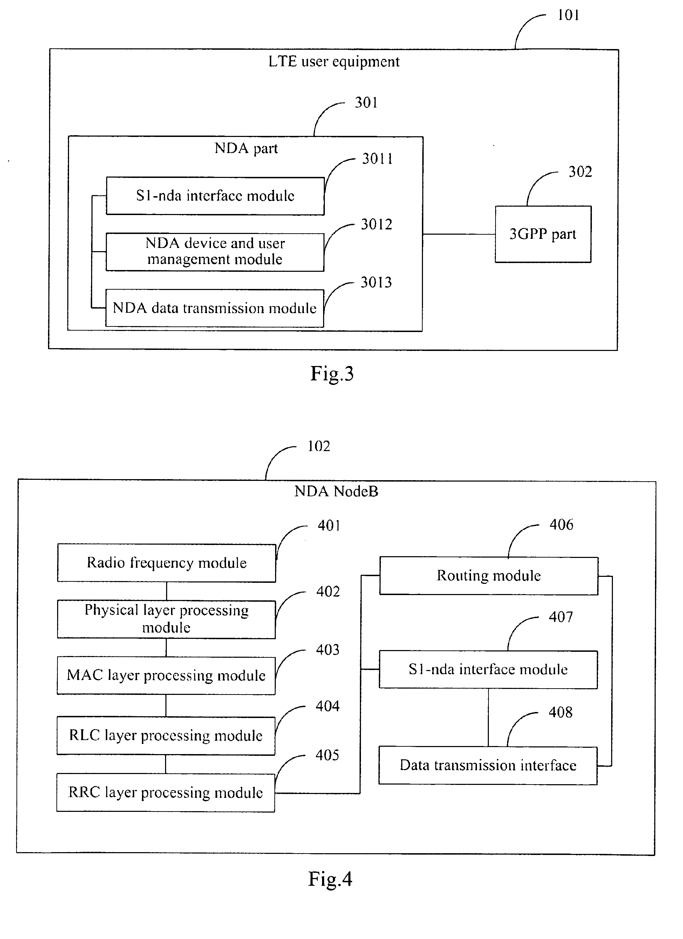

Referring to Fig.3, the core network 101 in this embodiment includes an NDApart 301 and a 3GPP part 302. The NDA part 301 further includes an S1-nda interface module 3011, an NDA device and user management module 3012 and an NDA data transmission module 3013.

The S1-nda interface module 3011 is configured to establish the communication interface with the NDA NodeB. In this embodiment, an S1 interface is simplified and improved, so the simplified and improved S1 interface will be referred to as an S1-nda interface.

The NDA device and user management module 3012 is configured to manage an access of the NDA user equipment to the 3GPP part in the core network, to authenticate the NDA user equipment and to establish and manage a communication link for the NDA user equipment.

The NDA data transmission module 3013 is configured to transmit the NDA user data service to the 3GPP part in the core network.

Referring to Fig.4, in this embodiment, the NodeB 102 includes a radio frequency module 401, a physical layer processing module 402, a Media Access Control (MAC) layer processing module 403, a Radio Link Control (RLC) layer processing module 404, a Radio Resource Control (RRC) layer processing module 405, a routing module 406 and an S1-nda interface module 407. Under the 3GPP LTE standard and protocol architecture, the NDA NodeB 102 simplifies protocol flows and functions and is embodied as an efficient and low-cost small NodeB with lower power and a smaller number of supported users. Also the NDA NodeB 102 can operate independently from a core network and transmit data through a built-in routing function over the Internet. A detailed description will be given as follows:

The S1-nda interface module 407 is configured to establish the communication interface with the NDA part in the core network, to establish for the NDA user equipment the communication link with the NDA part in the core network and to transmit the NDA user data service. The S1-nda interface module is further configured to perform one or more procedures of access control, encrypted authentication and billing on the NDA user equipment, roam control of the NDA user equipment and data link control of the NDA user equipment.

The routing module 406 is configured to establish the communication link with the local area or wide area Internet and to transmit the NDA user data service to the local area or wide area Internet.

The radio frequency module 401 is configured to transmit and receive data signal. After the NDA NodeB 102 is powered on, the radio frequency module transmits a system broadcast message including identification information indicating NodeB capability attributed to NDA mode.

The physical layer processing module 402 is configured to perform one or more procedures of encoding or decoding and modulating or demodulating the input data signal, multi-antenna transmission procedure and link adaptation and retransmission procedures.

The MAC layer processing module 403 is configured to perform one or more procedures of scheduling, transmitting and retransmitting an RLC layer data packet in the downlink and one or more procedures of user scheduling and decoding and retransmitting an MAC data packet in the uplink.

The RLC layer processing module 404 is configured to segment an IP data packet and retransmit an IP data packet in the downlink and to concatenate and reassemble an MAC data packet and retransmit an MAC data packet in the uplink.

The RRC layer processing module 405 is configured to control a radio link and to manage a radio resource.

The NDA NodeB 102 further includes a data transmission interface 408 configured to provide transmission over a physical link, which is a final ingress and egress of various logic interfaces and data channels. Stated otherwise, the routing module 406 and the S1-nda interface module 407 communicate with the outside via the data transmission interface 408.

Since the NDA NodeB generally covers indoor and hotspot areas, the respective modules in the NDA NodeB are simplified in this embodiment to accommodate a demand for transmission indoor and in a hotspot area and lower a cost of the device.

The radio frequency module 401 has one or more of the following features:

A downlink power range adopted by the radio frequency module is below an LTE standard specified downlink power range, for example, downlink power is below 20dBm.

Uplink sensitivity of the radio frequency module is below an LTE standard specified uplink sensitivity, for example, the uplink sensitivity is below -85dBm (given Quadrature Phase Shift Keying (QPSK) and a 1/3 code rate).

An Adjacent Channel Leakage Ratio of a filter of a transmitter in the radio frequency module is below an LTE standard specified Adjacent Channel Leakage Ratio, e.g., the Adjacent Channel Leakage Ratio is below 30dB.

Out-of-band radiation of a transmitter in the radio frequency module is below LTE standard specified out-of-band radiation, for example, the out-of-band radiation is above -30dBm/1MHz.

The physical layer processing module 402 has one or more of the following features:

The physical layer processing module supports less multi-antenna transmission modes than LTE standard specified multi-antenna transmission modes, for example, only the mode 1 and the mode 3 in the protocol 3GPP TS36.222 are reserved.

A measurement period and a feedback period configured in the physical layer processing module are above an LTE standard specified measurement period and feedback period respectively.

The number of control channels and the number of reference symbols configured in the physical layer processing module are below LTE standard specified number of control channels and LTE standard specified number of reference symbols respectively.

An NDA-related procedure being less than an LTE specified related procedure as mentioned in an embodiment of the invention particularly refers to less steps performed in the NDA-related procedure than the steps in the LTE specified related procedure and a smaller amount of information of interaction signaling in the NDA-related procedure than the amount of information of interaction signaling in the LTE specified related procedure.

The MAC layer processing module 403 has one or more of the following features:

The MAC layer processing module performs less QoS-related control and scheduling procedures than LTE standard specified QoS-related control and scheduling procedures, for example, one QoS Class Identifier (QCI) level is not distinguished from another, data is queued for transmission based upon the amount of data in a data buffer waiting for transmission, or data packets are scheduled sequentially for transmission in an order that they arrive.

The MAC layer processing module schedules a less number of supported users limited to a number below a less preset value and the preset value itself is rather small, for example, two users are scheduled in the same timeslot while eight users are supported by the system.

The MAC layer processing module performs less related protection and operation procedures in a data packet transmission process than LTE standard specified related protection and operation procedures in a data packet transmission process.

The RLC layer processing module 404 has the following feature:

The RLC layer processing module performs a less retransmission procedure than an LTE standard specified retransmission procedure, for example, only an Acknowledged Mode (AM) is reserved.

The RRC layer processing module 405 has one or more of the following features:

The RRC layer processing module performs a less random access procedure and access control procedure than an LTE standard specified random access procedure and access control procedure.

The RRC layer processing module performs a less system information broadcast procedure than an LTE standard specified system information broadcast procedure.

Transmission mode configuration information in the RRC layer processing module regarding the NDA user equipment is less than LTE standard specified transmission mode configuration information.

Cell signal measurement and report configuration information of the RRC layer processing module is less than LTE standard specified cell signal measurement and report configuration information respectively.

The respective communication layer modules in the NDA NodeB 102 have been introduced above, and the NDA NodeB further includes control and management layer modules, e.g., a configuration module configured to configure a control channel after establishing a connection with the core network.

In this embodiment, the internal functions of the respective modules are simplified, but also modules in the NDA NodeB can be simplified, for example, the NDA NodeB does not include a Packet Data Convergence Protocol (PDCP) layer processing module, a Non-Access Stratum (NAS) processing module and a data packet encryption module to thereby significantly improve a processing capacity and speed of the NDA NodeB.

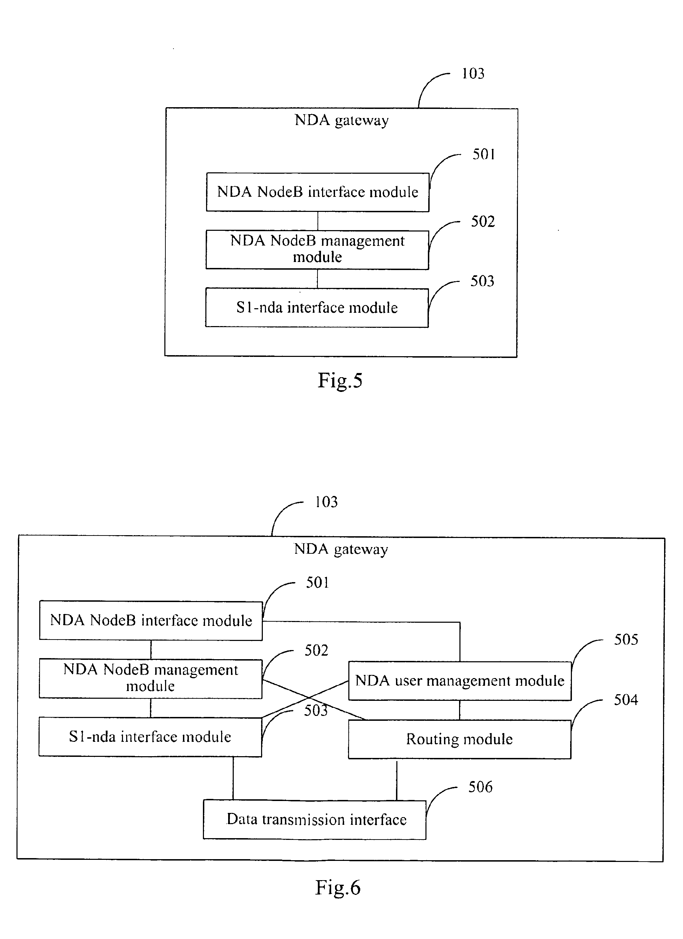

Referring to Fig.5, in this embodiment, the NDA gateway 103 includes an NDA NodeB interface module 501, an NDA NodeB management module 502 and an S1-ndu interface module 503.

The NDA NodeB interface module 501 is configured to establish the communication interface with the NDA NodeB, to establish for the NDA user equipment the communication link with the NDA NodeB and to transmit the NDA user data service with the NDA NodeB.

The NDA NodeB management module 502 is configured to perform one or more procedures of authentication, access management and parameter configuration on the NDA NodeB.

The S1-ndu interface module 503 is configured to establish the communication interface with the NDA part in the core network, to establish for the NDA user equipment the communication link with the NDA part in the core network and to transmit the NDA user data service with the NDA part in the core network.

The NDA NodeB can also be connected with the Internet through the NDA gateway, so the NDA gateway further includes a routing module 504 and an NDA user management module 505 as illustrated in Fig.6.

The routing module 504 is configured to encapsulate service data of the NDA user equipment into an IP protocol data packet and to transmit the IP protocol data packet to the Internet.

The NDA user management module 505 is configured to perform one or more procedures of access management, authentication and billing on the NDA user equipment. The NDA user management module 505 can manage the NDA user equipment when the NDA user equipment is connected with the Internet.

The NDA gateway 103 further includes a data transmission interface 506 configured to provide transmission over a physical link, which is a final ingress and egress of various logic interfaces and data channels. Stated otherwise, the routing module 504 and the S1-nda interface module 503 communicate with the outside via the data transmission interface 506.

In this embodiment, all of the interface between the NDA NodeB and the core network, the interface between the NDA NodeB and the NDA gateway and the interface between the NDA gateway and the core network are S1-nda interfaces. The interface between the LTE NodeB and the core network is an S1 interface. The S1-nda interface is functionally simplified greatly as compared with the original S1 interface. The S1-nda interface generally performs functions of access control, encrypted authentication and billing of the NDA user equipment; roaming of the NDA user equipment; managing a data link of the NDA user equipment; data transmission of the NDA user equipment, etc. The S1 interface is a 3GPP currently defined interface between a NodeB and a core network to support functions of data transmission, QoS management and mobility management.

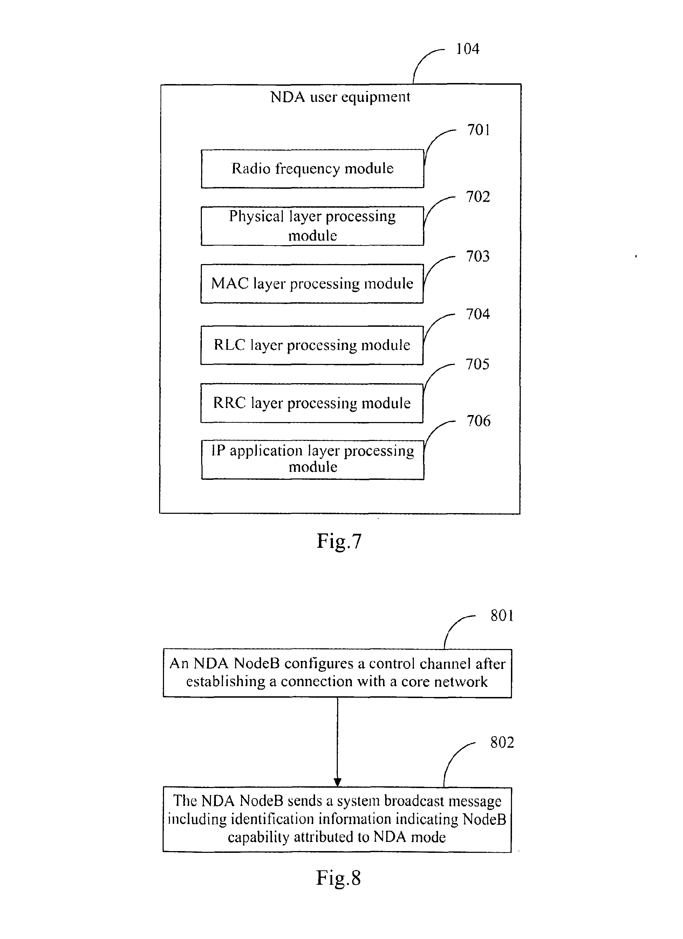

Referring to Fig.7, in this embodiment, the NDA user equipment 104 includes a radio frequency module 701, a physical layer processing module 702, an MAC layer processing module 703, an RLC layer processing module 704, an RRC layer processing module 705 and an IP application layer processing module 706.

The radio frequency module 701 is configured to transmit and receive data signal. After the NDA user equipment is powered on, the radio frequency module 701 receives the system broadcast message including identification information indicating the NodeB capability attributed to the NDA mode. The system broadcast message received by the radio frequency module 701 is a system broadcast message of an access cell or a system broadcast message of an adjacent cell.

The physical layer processing module 702 is configured to perform one or more procedures of encoding or decoding and modulating or demodulating the data signal, a multi-antenna transmission procedure and link adaptation and retransmission procedures.

The MAC layer processing module 703 is configured to perform one or more procedures of scheduling, transmitting and retransmitting an RLC layer data packet in the uplink and to decode and/or retransmit an MAC data packet in the downlink.

The RLC layer processing module 704 is configured to segment an IP data packet and retransmit an IP data packet in the uplink and to concatenate and reassemble an MAC data packet and retransmit an MAC data packet in the downlink.

The RRC layer processing module 705 is configured to control a radio link and to manage a radio resource.

The IP application layer processing module 706 is configured to process various information and data of service application layer.

The internal modules of the NDA user equipment in this embodiment are simplified to adapt for transmission of a nomadic high-speed IP data service and described particularly as follows:

The radio frequency module 701 has one or more of the following features:

A downlink power range adopted by the radio frequency module is below an LTE standard specified downlink power range, for example, downlink power is below 20dBm.

Uplink sensitivity of the radio frequency module is below an LTE standard specified uplink sensitivity, for example, the uplink sensitivity is below -85dBm (given Quadrature Phase Shift Keying (QPSK) and a 1/3 code rate).

An Adjacent Channel Leakage Ratio of filter of a transmitter in the radio frequency module is below an LTE standard specified Adjacent Channel Leakage Ratio, e.g., the Adjacent Channel Leakage Ratio is below 30dB.

Out-of-band radiation of a transmitter in the radio frequency module is below LTE standard specified out-of-band radiation, for example, the out-of-band radiation is above -30dBm/1MHz.

The physical layer processing module 702 has one or more of the following features:

The physical layer processing module supports less multi-antenna transmission modes than LTE standard specified multi-antenna transmission modes, for example, only the mode 1 and the mode 3 in the protocol 3GPP TS36.222 are reserved.

A measurement period and a feedback period configured in the physical layer processing module are above an LTE standard specified measurement period and feedback period respectively.

The number of control channels and the number of reference symbols configured in the physical layer processing module are below LTE standard specified number of control channels and LTE standard specified number of reference symbols respectively.

The MAC layer processing module 703 has one or more of the following features:

The MAC layer processing module performs less QoS-related control and scheduling procedures than LTE standard specified QoS-related control and scheduling procedures, for example, one QCI level is not distinguished from another, data is queued for transmission based upon the amount of data in a data buffer waiting for transmission, or data packets are scheduled sequentially for transmission in an order that they arrive.

The MAC layer processing module performs less related protection and operation procedures in a data packet transmission process than LTE standard specified related protection and operation procedures in a data packet transmission process.

The RLC layer processing module 704 has the following feature:

The RLC layer processing module performs a less retransmission procedure than an LTE standard specified retransmission procedure, for example, only an AM mode is reserved.

The RRC layer processing module 705 has one or more of the following features:

The RRC layer processing module performs a less random access procedure and access control procedure than an LTE standard specified random access procedure and access control procedure.

The RRC layer processing module performs a less system information broadcast procedure than an LTE standard specified system information broadcast procedure.

Transmission mode configuration information in the RRC layer processing module regarding the NDA user equipment is less than LTE standard specified transmission mode configuration information.

Cell signal measurement and report configuration information of the RRC layer processing module is less than LTE standard specified cell signal measurement and report configuration information respectively.

Since in this embodiment the radio frequency module to the RRC layer processing module in the NDA user equipment are simplified, a simplified interface embodied by the radio frequency module to the RRC layer processing module will be referred to an NDA-Uu interface, and the NDA user equipment is connected with the NDA NodeB via the NDA-Uu interface.

The respective communication layer modules in the NDA user equipment have been introduced above, and the NDA user equipment further includes control and management layer modules, e.g., a configuration module configured to configure the NDA user equipment in the NDA mode when the radio frequency module receives the system broadcast message of the access cell, particularly the system broadcast message including identification information indicating the NodeB capability attributed to the NDA mode, after power-on.

The NDA user equipment further includes an LTE intermediary layer processing module configured to support transmission in LTE mode. When the radio frequency module receives the system broadcast message of the adjacent cell in the LTE mode, the NDA user equipment further includes:

A measurement module configured to measure the adjacent cell and to report a measurement result through the radio frequency module.

A control module configured to be disconnected from an LTE NodeB and to switch from the LTE mode to the NDA module upon reception of a switching instruction from the LTE NodeB.

The configuration module is further configured to configure the NDA user equipment in the NDA mode after switching to the NDA mode.

Generally the NDA system and the structures and functions of the respective internal devices thereof have been introduced above. In this embodiment, the simplified and improved system is proposed to accommodate transmission of nomadic high-speed IP data service. One of aspects related to the new system lies in a cell access process which will be introduced below.

Referring to Fig.8, a general method flow of a cell access method at the network side in this embodiment is as follows:

Step 801: An NDA NodeB configures a control channel after establishing a connection with a core network.

Step 802: The NDA NodeB sends a system broadcast message including identification information indicating NodeB capability attributed to NDA mode.

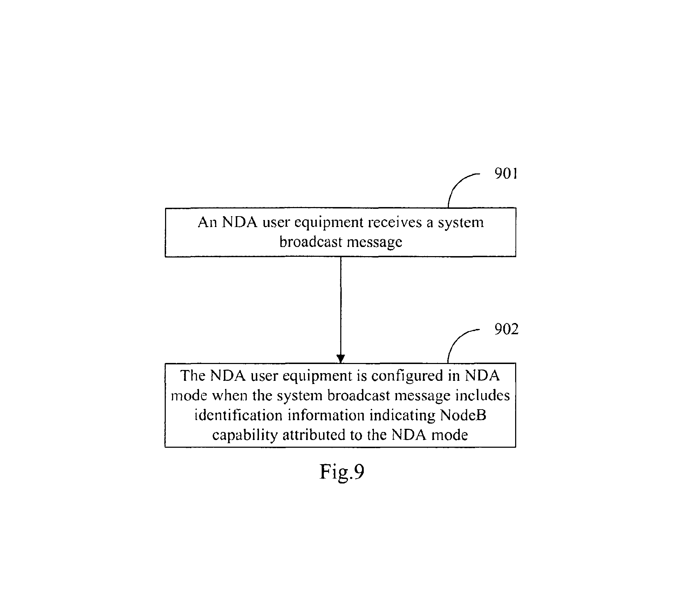

Referring to Fig.9, a general method flow of a cell access method at the user equipment side in this embodiment is as follows:

Step 901: An NDA user equipment receives a system broadcast message.

Step 902: The NDA user equipment is configured in NDA mode when the system broadcast message includes identification information indicating NodeB capability attributed to the NDA mode.

The NDA user equipment can support only the NDA mode or both the NDA mode and LTE mode, and the NDA user equipment supporting both of the modes can be referred to as an LTE + NDA user equipment. Cell access processes of an NDA user equipment in the two modes will be introduced below.

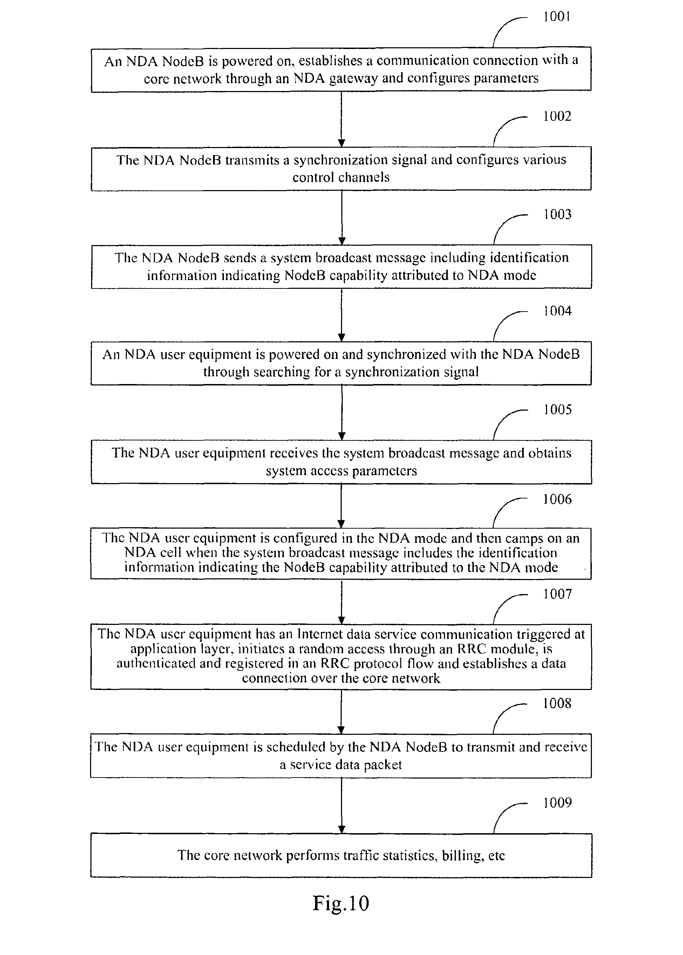

Referring to Fig. 10, a flow of a cell access method of an NDA user equipment only supporting NDA mode in this embodiment is as follows.

Step 1001: An NDA NodeB is powered on, establishes a communication connection with a core network through an NDA gateway and configures parameters. In order to avoid interference with a cellular network including an LTE NodeB as much as possible, the NDA NodeB is configured to operate in a different frequency band from the LTE NodeB. Of course, it can be alternatively configured to operate in the same frequency band.

Step 1002: The NDA NodeB transmits a synchronization signal and configures various control channels.

Step 1003: The NDA NodeB sends a system broadcast message including identification information indicating NodeB capability attributed to NDA mode.

The step 1001 to the step 1003 relate to a process at the NodeB side after being powered on.

Step 1004: An NDA user equipment is powered on and synchronized with the NDA NodeB through searching for a synchronization signal.

Step 1005: The NDA user equipment receives the system broadcast message and obtains system access parameters.

Step 1006: The NDA user equipment is configured in the NDA mode and then camps on an NDA cell when the system broadcast message includes the identification information indicating the NodeB capability attributed to the NDA mode.

The following steps are performed when there is a demand for a data service:

Step 1007: The NDA user equipment has an Internet data service communication triggered at application layer, initiates a random access through an RRC module, is authenticated and registered in an RRC protocol flow and establishes a data connection over the core network.

Step 1008: The NDA user equipment is scheduled by the NDA NodeB to transmit and receive a service data packet.

Step 1009: The core network performs traffic statistics, billing, etc..

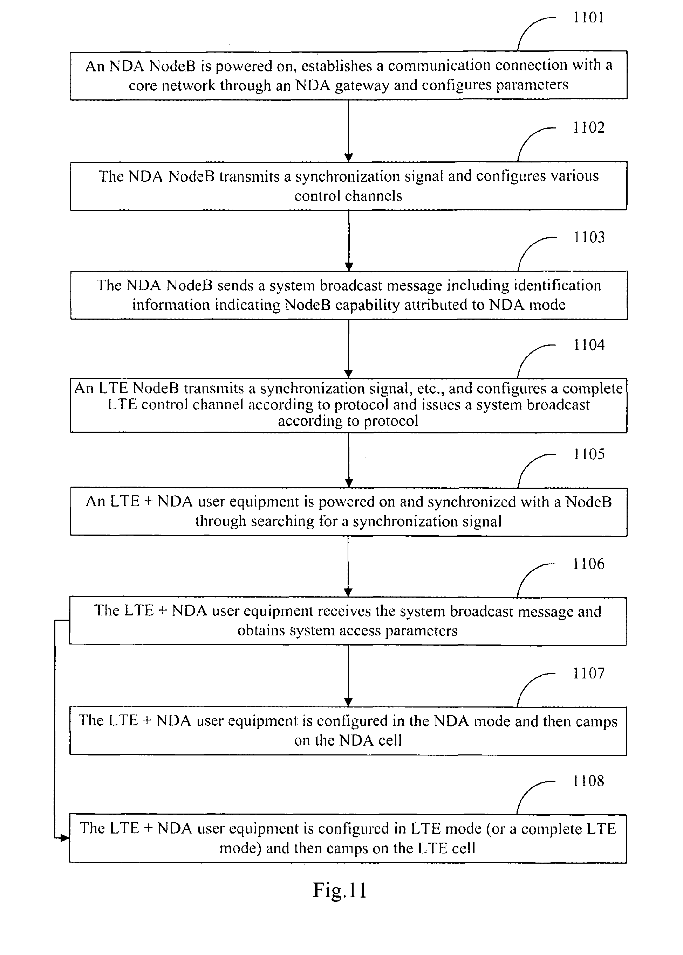

Referring to Fig.11, a flow of a cell access method of an LTE + NDA user equipment supporting both NDA mode and LTE mode in this embodiment is as follows:

Step 1101: An NDA NodeB is powered on, establishes a communication connection with a core network through an NDA gateway and configures parameters.

Step 1102: The NDA NodeB transmits a synchronization signal and configures various control channels.

Step 1103: The NDA NodeB sends a system broadcast message including identification information indicating NodeB capability attributed to NDA mode, particularly sends the system broadcast message based upon configured control information.

The step 1101 to the step 1103 relate to a process at the NodeB side after being powered on.

Step 1104: An LTE NodeB transmits a synchronization signal, etc., and configures a complete LTE control channel according to protocol and issues a system broadcast according to protocol, particularly over a configured LTE control channel.

Step 1105: An LTE + NDA user equipment is powered on and synchronized with a NodeB through searching for a synchronization signal. Here the NodeB may be the NDA NodeB or the LTE NodeB dependent upon a practical condition.

Step 1106: The LTE + NDA user equipment receives the system broadcast message and obtains system access parameters.

If the broadcast message indicates that the coverage cell is an NDA cell, then the flow proceeds to the step 1107, and if the broadcast message indicates that the coverage cell is an LTE cell, then the flow proceeds to the step 1108.

Step 1107: The LTE + NDA user equipment is configured in the NDA mode and then camps on the NDA cell. Reference can be made to the steps 1007 to 1009 for a subsequent process.

Step 1108: The LTE + NDA user equipment is configured in LTE mode (or a complete LTE mode) and then camps on the LTE cell. Reference can be made to relevant LTE flow processes for a subsequent communication process in an LTE system.

This embodiment proposes the concept of NDA cell and thus relates to the issue of switching between an NDA cell and an LTE cell. A cell switching process will be introduced below.

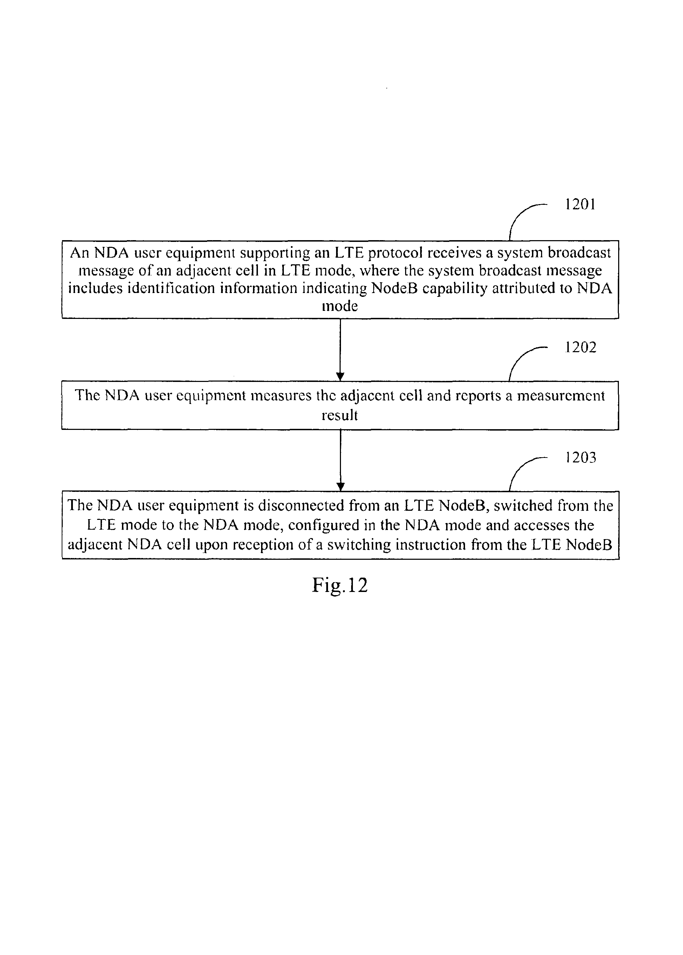

Referring to Fig. 12, a general flow of a cell switching method in this embodiment is as follows:

Step 1201: An NDA user equipment supporting an LTE protocol receives a system broadcast message of an adjacent cell in LTE mode, where the system broadcast message includes identification information indicating NodeB capability attributed to NDA mode.

Step 1202: The NDA user equipment measures the adjacent cell and reports a measurement result.

Step 1203: The NDA user equipment is disconnected from an LTE NodeB, switched from the LTE mode to the NDA mode, configured in the NDA mode and accesses the adjacent NDA cell upon reception of a switching instruction from the LTE NodeB.

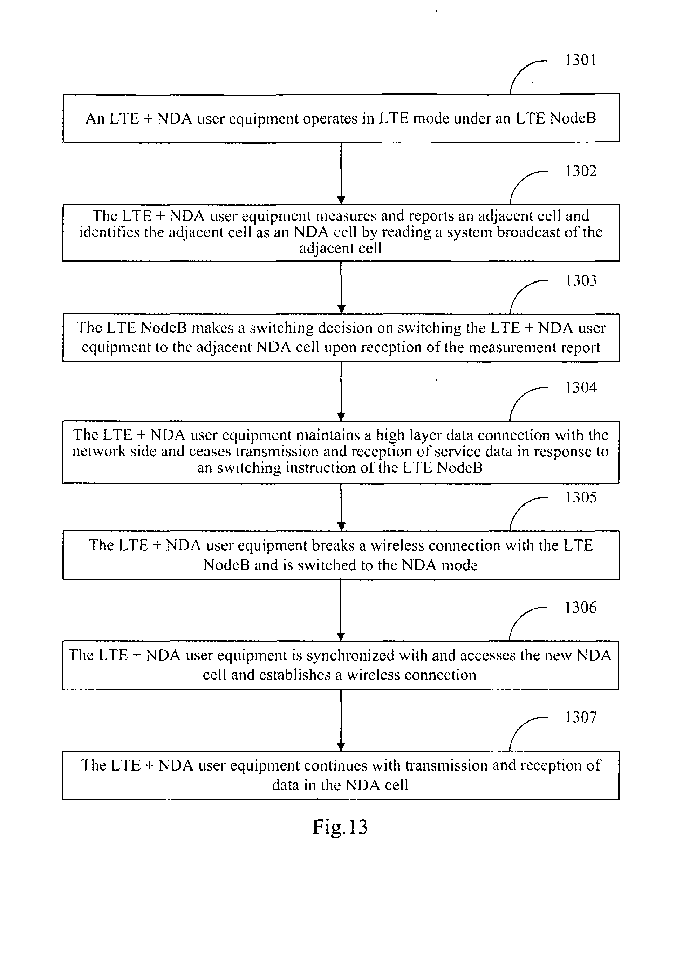

Referring to Fig.13, a detailed flow of a cell switching method in this embodiment is as follows:

Step 1301: An LTE + NDA user equipment operates in LTE mode under an LTE NodeB.

Step 1302: The LTE + NDA user equipment measures and reports an adjacent cell and identifies the adjacent cell as an NDA cell by reading a system broadcast of the adjacent cell.

Step 1303: The LTE NodeB makes a switching decision on switching the LTE + NDA user equipment to the adjacent NDA cell upon reception of the measurement report.

Step 1304: The LTE + NDA user equipment maintains a high layer data connection with the network side and ceases transmission and reception of service data in response to a switching instruction of the LTE NodeB.

Step 1305: The LTE + NDA user equipment breaks a wireless connection with the LTE NodeB and is switched to the NDA mode.

Step 1306: The LTE + NDA user equipment is synchronized with and accesses the new NDA cell and establishes a wireless connection.

Step 1307: The LTE + NDA user equipment continues with transmission and reception of data in the NDA cell.

Internal structures and functions of the NDA eNB and the NDA user equipment in the cell access process and the cell switching process will be introduced below.

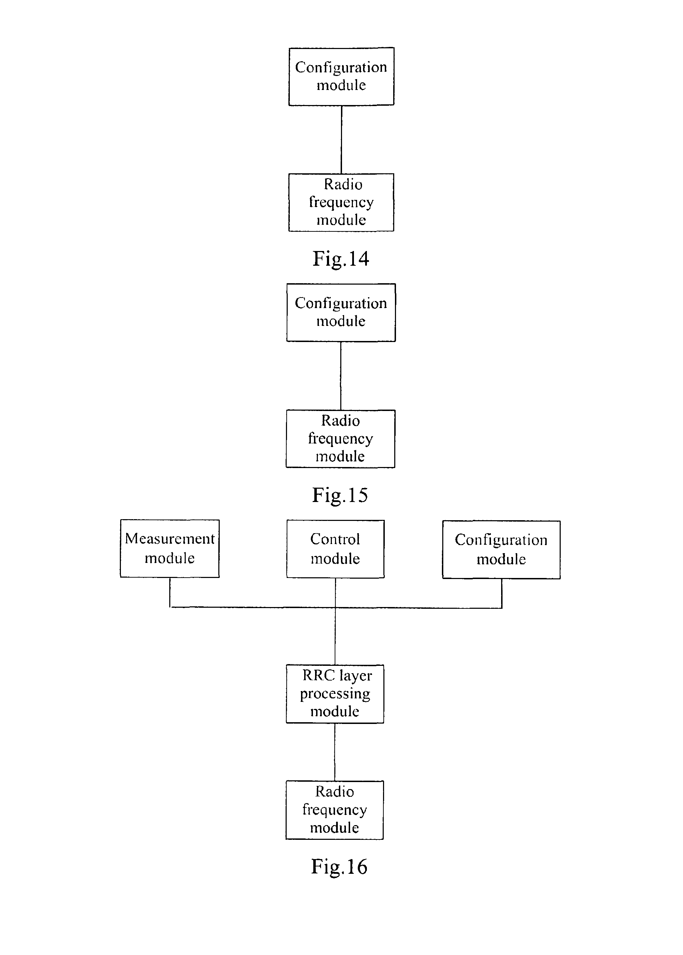

Referring to Fig. 14, the NDA NodeB in this embodiment includes a configuration module and a radio frequency module 401.

The configuration module is configured to configure a control channel after establishing a connection with a core network.

The radio frequency module 401 is configured to send a system broadcast message including identification information indicating NodeB capability attributed to NDA mode, particularly, to send the system broadcast message over the configured control channel.

Referring to Fig.15, the NDA user equipment in this embodiment includes a radio frequency module 701 and a configuration module.

The radio frequency module 701 is configured to receive a system broadcast message.

The configuration module is configured to configure the NDA user equipment in NDA mode when the system broadcast message includes identification information indicating NodeB capability attributed to the NDA mode.

The NDA user equipment further includes an LTE intermediary layer processing module configured to support transmission in LTE mode. The LTE intermediary layer processing module configures the NDA user equipment in the LTE mode when the system broadcast message includes no identification information indicating NodeB capability attributed to the NDA mode.

Referring to Fig. 16, the NDA user equipment during switching of a cell in this embodiment includes a radio frequency module 701, a measurement module, a control module, a configuration module and RRC layer processing module 705.

The radio frequency module 701 is configured to receive a system broadcast message of an adjacent cell in LTE mode, where the system broadcast message includes identification information indicating NodeB capability attributed to NDA mode.

The measurement module is configured to measure the adjacent cell and to report a measurement result.

The control module is configured to be disconnected from an LTE NodeB and to switch from the LTE mode to the NDA module upon reception of a switching instruction from the LTE NodeB.

The configuration module is configured to configure the NDA user equipment in the NDA mode.

The RRC layer processing module 705 is configured to access the adjacent NDA cell.

The embodiments of the invention provide a simplified NDA NodeB and a simplified interface so that the NDA NodeB can be connected directly with the Internet without a core network and the core network can cooperate with the simplified NDA NodeB via the simplified interface to thereby improve a data transmission capacity and efficiency and accommodate a demand for a nomadic high-speed IP data service. The embodiments of the invention simplify and improve the core network, the NodeB and the user equipment for a greatly improved data transmission capacity and efficiency. Moreover an NDA gateway is added in an NDA system to alleviate capacity burden on the core network and to facilitate management of the NodeB and a data service. Furthermore the embodiments of the invention provide cell access and switching solutions for the simplified and improved NDA system.

Those skilled in the art shall appreciate that the embodiments of the invention can be embodied as a method, a system or a computer program product. Therefore the invention can be embodied in the form of an all-hardware embodiment, an all-software embodiment or an embodiment of software and hardware in combination. Furthermore the invention can be embodied in the form of a computer program product embodied in one or more computer useable storage mediums (including but not limited to a disk memory, an optical memory, etc.) in which computer useable program codes are contained.

The invention has been described in a flow chart and/or a block diagram of the method, the device (system) and the computer program product according to the embodiments of the invention. It shall be appreciated that respective flows and/or blocks in the flow chart and/or the block diagram and combinations of the flows and/or the blocks in the flow chart and/or the block diagram can be embodied in computer program instructions. These computer program instructions can be loaded onto a general-purpose computer, a specific-purpose computer, an embedded processor or a processor of another programmable data processing device to produce a machine so that the instructions executed on the computer or the processor of the other programmable data processing device create means for performing the functions specified in the flow(s) of the flow chart and/or the block(s) of the block diagram.

These computer program instructions can also be stored into a computer readable memory capable of directing the computer or the other programmable data processing device to operate in a specific manner so that the instructions stored in the computer readable memory create an article of manufacture including instruction means which perform the functions specified in the flow(s) of the flow chart and/or the block(s) of the block diagram.

These computer program instructions can also be loaded onto the computer or the other programmable data processing device so that a series of operational steps are performed on the computer or the other programmable data processing device to create a computer implemented process so that the instructions executed on the computer or the other programmable device provide steps for performing the functions specified in the flow(s) of the flow chart and/or the block(s) of the block diagram.

Evidently those skilled in the art can make various modifications and variations to the invention without departing from the spirit and scope of the invention. Thus the invention is also intended to encompass these modifications and variations thereto so long as the modifications and variations come into the scope of the claims appended to the invention and their equivalents.

## Claims

1. A Nomadic Data Access (NDA) system, comprising a core network and an NDA NodeB, wherein:
the core network comprises an NDA part and a 3GPP part, wherein the NDA part is configured to establish a communication interface with the NDA NodeB, to establish a communication link for an NDA user equipment through the NDA NodeB and to transmit an NDA user data service to the 3GPP part in the core network; and the 3GPP part is configured to process the NDA user data service and to perform 3GPP system functions of Release 10 and earlier; and
the NDA NodeB is configured to establish the communication interface with the NDA part in the core network, to establish for the NDA user equipment the communication link with the NDA part in the core network and to transmit the NDA user data service, or to establish a communication link with a local area or wide area Internet and to transmit the NDA user data service to the local area or wide area Internet.

2. The NDA system according to claim 1, wherein the NDA part in the core network comprises:
an S1-nda interface module configured to establish the communication interface with the NDA NodeB;
an NDA device and user management module configured to establish and manage a communication link of the NDA user equipment to the 3GPP part in the core network, to manage an access of the NDA user equipment and to authenticate the NDA user equipment; and
an NDA data transmission module configured to transmit the NDA user data service to the 3GPP part in the core network.

3. The NDA system according to claim 1, wherein the NDA NodeB comprises a routing module and an S1-nda interface module, and wherein:
the S1-nda interface module is configured to establish the communication interface with the NDA part in the core network, to establish for the NDA user equipment the communication link with the NDA part in the core network and to transmit the NDA user data service; and
the routing module is configured to establish the communication link with the local area or wide area Internet and to transmit the NDA user data service to the local area or wide area Internet.

4. The NDA system according to claim 3, wherein the NodeB further comprises a radio frequency module, a physical layer processing module, an MAC layer processing module, an RLC layer processing module and an RNC layer processing module, and wherein:
the radio frequency module is configured to transmit and receive a data signal of the NDA NodeB;
the physical layer processing module is configured to perform one or more procedures of encoding/decoding and modulating/demodulating the data signal, a multi-antenna transmission procedure and link adaptation and retransmission procedures;
the MAC layer processing module is configured to perform one or more procedures of scheduling, transmitting and retransmitting an RLC layer data packet in downlink and one or more procedures of user scheduling and decoding and retransmitting an MAC data packet in uplink;
the RLC layer processing module is configured to segment an IP data packet and retransmit an IP data packet in the downlink and to concatenate and reassemble an MAC data packet and retransmit an MAC data packet in the uplink;
the RRC layer processing module is configured to control a radio link and to manage a radio resource; and
the S1-nda interface module is further configured to perform access control, encrypted authentication, billing, roam control and data link control on the NDA user equipment.

5. The NDA system according to claim 4, wherein the data signal transmitted from the radio frequency module comprises a system broadcast message comprising identification information indicating NodeB capability attributed to NDA mode.

6. The NDA system according to claim 4, wherein the radio frequency module has one or more of following features:
a downlink power range adopted by the radio frequency module is below LTE standard specified downlink power range;
uplink sensitivity of the radio frequency module is below LTE standard specified uplink sensitivity;
an Adjacent Channel Leakage Ratio of a transmitter filter in the radio frequency module is below LTE standard specified Adjacent Channel Leakage Ratio; and
out-of-band radiation of a transmitter in the radio frequency module is below LTE standard specified out-of-band radiation.

7. The NDA system according to claim 4, wherein the physical layer processing module has one or more of following features:
the physical layer processing module supports less multi-antenna transmission modes than LTE standard specified multi-antenna transmission modes;
a measurement period and a feedback period configured in the physical layer processing module are above LTE standard specified measurement period and feedback period respectively; and
number of control channels and number of reference symbols configured in the physical layer processing module are below LTE standard specified number of control channels and LTE standard specified number of reference symbols respectively.

8. The NDA system according to claim 4, wherein the MAC layer processing module has one or more of following features:
the MAC layer processing module performs less QoS-related control and scheduling procedures than LTE standard specified QoS-related control and scheduling procedures;
the MAC layer processing module schedules a less number of supported users limited to a number below a preset value; and
the MAC layer processing module performs less related protection and operation procedures in a data packet transmission process than LTE standard specified related protection and operation procedures in a data packet transmission process.

9. The NDA system according to claim 4, wherein the RLC layer processing module has following feature:
the RLC layer processing module performs a less retransmission procedure than LTE standard specified retransmission procedure.

10. The NDA system according to claim 4, wherein the RRC layer processing module has one or more of following features:
the RRC layer processing module performs a less random access procedure and access control procedure than LTE standard specified random access procedure and access control procedure;
the RRC layer processing module performs a less system information broadcast procedure than LTE standard specified system information broadcast procedure;
transmission mode configuration information in the RRC layer processing module regarding the NDA user equipment is less than LTE standard specified transmission mode configuration information; and
cell signal measurement and report configuration information of the RRC layer processing module is less than LTE standard specified cell signal measurement and report configuration information respectively.

11. The NDA system according to claim 4, wherein the NDA NodeB further comprises:
a configuration module configured to configure a control channel after establishing a connection with the core network.

12. The NDA system according to claim 4, wherein the NDA NodeB does not include a PDCP layer processing module, an Non-Access Stratum (NAS) processing module and a data packet encryption module.

13. An NDA gateway, configured to be connected with an NDA NodeB and an NDA part in a core network and to forward an NDA user data service transmitted between the NDA NodeB and the NDA part in the core network, wherein the NDA gateway comprises:
an NDA NodeB interface module configured to establish a communication interface with the NDA NodeB, to establish for an NDA user equipment a communication link with the NDA NodeB and to transmit the NDA user data service with the NDA NodeB;
an NDA NodeB management module configured to perform one or more procedures of authentication, access management and parameter configuration on the NDA NodeB; and
an S1-ndu interface module configured to establish a communication interface with the NDA part in the core network, to establish for the NDA user equipment a communication link with the NDA part in the core network and to transmit the NDA user data service with the NDA part in the core network.

14. The NDA gateway according to claim 13, further comprising:
a routing module configured to encapsulate service data of the NDA user equipment into an IP protocol data packet and to transmit the IP protocol data packet to the Internet; and
an NDA user management module configured to perform one or more procedures of access management, authentication and billing on the NDA user equipment.

15. An NDA user equipment, configured to be connected with an NDA NodeB and to transmit an NDA user data service with the NDA NodeB, wherein the NDA user equipment comprises:
a radio frequency module configured to transmit and receive a data signal of the NDA user equipment;
a physical layer processing module configured to perform one or more procedures of encoding/decoding and modulating/demodulating the data signal, a multi-antenna transmission procedure and link adaptation and retransmission procedures;
an MAC layer processing module configured to perform one or more procedures of scheduling, transmitting and retransmitting an RLC layer data packet in uplink and to decode and/or retransmit an MAC data packet in downlink;
an RLC layer processing module configured to segment an IP data packet and retransmit an IP data packet in the uplink and to concatenate and reassemble an MAC data packet and retransmit an MAC data packet in the downlink;
an RRC layer processing module configured to control a radio link and to manage a radio resource; and
an IP application layer processing module configured to process various information and data of service application layer.

16. The NDA user equipment according to claim 15, wherein the data signal received by the radio frequency module comprises a system broadcast message comprising identification information indicating NodeB capability attributed to NDA mode.

17. The NDA user equipment according to claim 16, wherein the system broadcast message is a system broadcast message of an access cell or a system broadcast message of an adjacent cell.

18. The NDA user equipment according to claim 17, wherein the NDA user equipment further comprises a configuration module configured to configure the NDA user equipment in the NDA mode when the radio frequency module receives the system broadcast message of the access cell after power-on.

19. The NDA user equipment according to claim 17, wherein the NDA user equipment further comprises an LTE intermediary layer processing module configured to support transmission in LTE mode; and
when the radio frequency module receives the system broadcast message of the adjacent cell in the LTE mode, the NDA user equipment further includes:
a measurement module configured to measure the adjacent cell and to report a measurement result through the radio frequency module,
a control module configured to be disconnected from an LTE NodeB and to switch from the LTE mode to the NDA module upon reception of a switching instruction from the LTE NodeB,
and
a configuration module configured to configure the NDA user equipment in the NDA mode after switching to the NDA mode.

20. The NDA user equipment according to claim 15, wherein the radio frequency module has one or more of the following features:
a downlink power range adopted by the radio frequency module is below LTE standard specified downlink power range;
uplink sensitivity of the radio frequency module is below LTE standard specified uplink sensitivity;
an Adjacent Channel Leakage Ratio of a transmitter filter in the radio frequency module is below LTE standard specified Adjacent Channel Leakage Ratio; and
out-of-band radiation of a transmitter in the radio frequency module is below LTE standard specified out-of-band radiation.

21. The NDA user equipment according to claim 15, wherein the physical layer processing module has one or more of the following features:
multi-antenna transmission modes of the physical layer processing module are less than LTE standard specified multi-antenna transmission modes;
a measurement period and a feedback period configured in the physical layer processing module are above LTE standard specified measurement period and feedback period respectively;
and
number of control channels and number of reference symbols configured in the physical layer processing module are below LTE standard specified number of control channels and LTE standard specified number of reference symbols respectively.

22. The NDA user equipment according to claim 15, wherein the MAC layer processing module has one or more of the following features:
the MAC layer processing module performs less QoS-related control and scheduling procedures than LTE standard specified QoS-related control and scheduling procedures; and
the MAC layer processing module performs less related protection and operation procedures in a data packet transmission process than LTE standard specified related protection and operation procedures in a data packet transmission process.

23. The NDA user equipment according to claim 15, wherein the RLC layer processing module has the following feature:
the RLC layer processing module performs a less retransmission procedure than LTE standard specified retransmission procedure.

24. The NDA user equipment according to claim 15, wherein the RRC layer processing module has one or more of the following features:
the RRC layer processing module performs a less random access procedure and access control procedure than LTE standard specified random access procedure and access control procedure;
the RRC layer processing module performs a less system information broadcast procedure than LTE standard specified system information broadcast procedure;
transmission mode configuration information in the RRC layer processing module regarding the NDA user equipment is less than LTE standard specified transmission mode configuration information; and
cell signal measurement and report configuration information of the RRC layer processing module is less than LTE standard specified cell signal measurement and report configuration information respectively.

25. A core network, comprising an NDA part and a 3GPP part, wherein:
the NDA part in the core network is configured to establish a communication interface with an NDA NodeB, to establish a communication link for an NDA user equipment through the NDA NodeB and to transmit an NDA user data service to the 3GPP part in the core network; and
the 3GPP part in the core network is configured to process the NDA user data service and to perform 3GPP system functions of Release 10 and earlier.

26. An NDA NodeB, comprising a routing module and an S1-nda interface module, wherein:
the S1-nda interface module is configured to establish a communication interface with an NDA part in a core network, to establish for an NDA user equipment a communication link with the NDA part in the core network and to transmit an NDA user data service; and
the routing module is configured to establish a communication link with a local area or wide area Internet and to transmit the NDA user data service to the local area or wide area Internet.
